# EUROPEAN PATENT APPLICATION

(11) **EP 4 737 947 A1**
(43) Date of publication of application: **06.05.2026**
(21) Application number: 23942781.8
(22) Date of filing: 28.06.2023
(51) Int. Cl.: G01S 15/931

(54) **METHOD AND DEVICE FOR DETERMINING POSITION OF OBSTACLE IN SURROUNDING ENVIRONMENT OF VEHICLE**

(71) Applicant: Robert Bosch GmbH, 70442 Stuttgart (DE)
(72) Inventor: LIU, Shu, Shanghai 200335 (CN); ZHANG, Kaixuan, Shanghai 200335 (CN); YANG, Hao, Shanghai 200335 (CN); GU, Chenyi, Shanghai 200335 (CN); CAO, Longxu, Shanghai 200335 (CN)
(86) International application number: PCT/CN2023/103120
(87) International publication number: WO 2025/000260

(57) **Abstract**

The present application relates to a method for determining the position of an obstacle in the surroundings of a vehicle based on ultrasonic signals, comprising: clustering at least a portion of ultrasonic data samples in an ultrasonic data sample set to obtain one or more ultrasonic data sample clusters; determining one or more corresponding bounding boxes based on the one or more ultrasonic data sample clusters, wherein the one or more bounding boxes respectively comprise one or more ultrasonic data sample subsets in the ultrasonic data sample set; determining, for an ultrasonic data sample subset in the one or more ultrasonic data sample subsets, ultrasonic signal-related features of the ultrasonic data sample subset, and determining the position of an obstacle corresponding to the ultrasonic data sample subset based on the ultrasonic signal-related features of the ultrasonic data sample subset.

## Description

### Technical Field

The present application relates to automatic vehicle control, and more particularly, to a method and an apparatus for determining the position of an obstacle in the surroundings of the vehicle based on ultrasonic signals.

### Background

Parking space detection is a crucial step in implementing vehicle-assisted parking. This can be accomplished by utilizing sensor signals to identify obstacles in the vehicle's surroundings. By enhancing the accuracy of obstacle position detection, parking space availability can be more precisely determined, thereby improving the performance of vehicle-assisted parking. Ultrasonic sensors (USSs) offer a cost-effective method for obstacle detection. However, traditional detection methods that rely on ultrasonic signals are usually rule-based and may not be effectively applied in complex scenarios. Additionally, the accuracy of obstacle position detection using ultrasonic signals requires improvement to enhance the performance of vehicle-assisted parking.

### Summary of the Invention

The following introduction is provided in order to introduce selected concepts in a simple manner, and these concepts will be further described in the detailed description below. The introduction is not intended to highlight the key or necessary features of the claimed subject matter, nor is it intended to limit the scope of the claimed subject matter.

According to one aspect of the present application, a method for determining the position of an obstacle in the surroundings of a vehicle based on ultrasonic signals is provided, wherein the vehicle has an ultrasonic sensor for transmitting and receiving ultrasonic signals to monitor the vehicle's surroundings. The method comprises: clustering at least a portion of ultrasonic data samples in an ultrasonic data sample set to obtain one or more ultrasonic data sample clusters; determining one or more corresponding bounding boxes based on the one or more ultrasonic data sample clusters, wherein the one or more bounding boxes respectively comprise one or more ultrasonic data sample subsets in the ultrasonic data sample set; and determining, for the ultrasonic data sample subset in the one or more ultrasonic data sample subsets, ultrasonic signal-related features of the ultrasonic data sample subset, and determining the position of an obstacle corresponding to the ultrasonic data sample subset based on the ultrasonic signal-related features of the ultrasonic data sample subset.

According to one aspect of the present application, a method for detecting an empty parking space is provided, comprising: determining the position of an obstacle in the surroundings of a vehicle based on ultrasonic signals by performing the method described herein; and detecting an empty parking space based on the determined position of the obstacle.

According to one aspect of the present application, a method for assisted parking is provided, comprising: determining the position of an obstacle in the surroundings of a vehicle based on ultrasonic signals by performing the method described herein; detecting an empty parking space based on the determined position of the obstacle; and planning a route for driving the vehicle into the empty parking space based on the detected empty parking space.

According to one aspect of the present application, a control system for a vehicle is provided, comprising: one or more processing units, which, when executing program instructions, are configured to perform the method described herein for determining the position of an obstacle in the surroundings of the vehicle based on ultrasonic signals.

According to one aspect of the present application, a machine-readable storage medium is provided, which stores executable instructions that, when executed, cause one or more processors to perform the method described herein for determining the position of an obstacle in the surroundings of a vehicle based on ultrasonic signals.

By utilizing the method of determining the position of an obstacle in the surroundings of a vehicle based on ultrasonic signals according to the present application, it is possible to accurately detect the position of the obstacle based on ultrasonic signals in various complex scenarios. This capability enables precise detection of an empty parking space, thereby enhancing the performance of the assisted parking function.

### Brief Description of the Drawings

The nature and advantages of the present disclosure may be further implemented by referring to the following
accompanying drawings. In the drawings, similar components or features may have the same reference signs.
FIG. 1 is a schematic diagram of a vehicle according to one example.
FIG. 2 is a schematic diagram of a control system in a vehicle according to one example.
FIG. 3 is a schematic diagram of ultrasonic data according to one example.
FIG. 4 is a schematic diagram of a method and module for determining the position of an obstacle around a vehicle according to one example.
FIG. 5 is a schematic diagram of a method and module for determining the position of an obstacle according to one example.
FIG. 6 is a flow chart of a method for determining the position of an obstacle in the surroundings of a vehicle according to one example.
FIG. 7 is a flow chart of a method for detecting an empty parking space according to one example.
FIG. 8 is a flow chart of a method for assisting parking according to one example.
FIG. 9 is a block diagram of a control system for a vehicle according to one example.

### Detailed Description of the Embodiments

The subject matter described herein will now be discussed with reference to exemplary embodiments. It should be understood that discussions about these embodiments are provided to aid those skilled in the art in better understanding and thereby implementing the subject matter described herein rather than limiting the scope of protection, applicability, or examples described in the Claims. Changes may be made to the functions and arrangements of the elements discussed without departing from the scope of protection of the content of the present disclosure. Various processes or components may be omitted, substituted, or added in the various examples as needed. For example, the described method may be performed in a different order than that described, and various steps may be added, omitted, or combined. In addition, features described in relation to some examples may also be combined in other examples.

As used herein, the term "comprising" and its variations are open terms, which mean "including but not limited to." The term "based on" indicates "at least partially based on." The terms "one example" and "an example" indicate "at least one example." The term "another example" indicates "at least one other example." The terms "first," "second," etc., can refer to different or the same objects. Unless explicitly stated in the context, the definition of one term is consistent throughout the Specification.

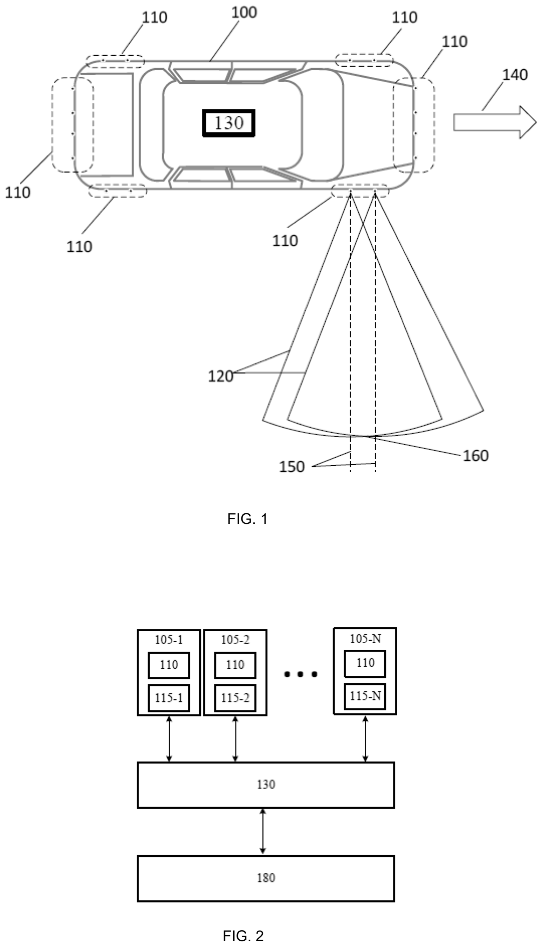

FIG. 1 is a schematic diagram of a vehicle according to one example.

An ultrasonic sensor 110 is installed on the vehicle 100. As shown in the figure, the ultrasonic sensor 110 may be installed on the front, rear, left and right sides of the vehicle, corresponding to the front, rear, left and right sides of the vehicle, respectively. The number and installation position of the ultrasonic sensor 110 are not limited to the case shown in FIG. 1. In different implementations, the vehicle 100 may comprise more or fewer ultrasonic sensors 110, and the installation position of the ultrasonic sensors may also be different.

The ultrasonic sensor 110 may transmit an ultrasonic signal 120. When the ultrasonic signal 120 encounters an obstacle and is reflected, the ultrasonic sensor 110 may receive the reflected ultrasonic echo signal. Various ultrasonic data related to the ultrasonic signal may be obtained based on the transmitted ultrasonic signal and the received echo. In one example, the ultrasonic sensor module may comprise an ultrasonic sensor 110 and a processing unit. The ultrasonic sensor 110 comprises a transmitter that transmits ultrasonic signals and a receiver that receives ultrasonic signals such as echoes. The corresponding processing unit may, based on the transmitted ultrasonic signals and the received echo signals, obtain various ultrasonic data which includes various features related to the ultrasonic signals.

For example, the two ultrasonic sensors 110 on the right front side of the vehicle shown in FIG. 1 may form an ultrasonic sensor module, which comprises two ultrasonic sensors for transmitting and receiving ultrasonic signals and a processing unit. The processing unit may obtain corresponding various ultrasonic data based on the ultrasonic signals transmitted by the corresponding two sensing units and the corresponding received echo signals; similarly, the two ultrasonic sensors 110 on the right rear side of the vehicle shown in FIG. 1, two ultrasonic sensors 110 on the left front side, two ultrasonic sensors 110 on the left rear side, four ultrasonic sensors 110 on the front side, and four ultrasonic sensors 110 on the rear side may form an ultrasonic sensor module with their corresponding processing units.

For example, the four ultrasonic sensors 110 on the right side of the vehicle shown in FIG. 1 and their corresponding processing units may form an ultrasonic sensor module, which may obtain corresponding various ultrasonic data based on the ultrasonic signals transmitted by the corresponding four sensors and the corresponding received echo signals; similarly, the four ultrasonic sensors 110 on the left side of the vehicle, the four ultrasonic sensors 110 on the front side, and the four ultrasonic sensors on the rear side may form an ultrasonic sensor module with their corresponding processing units.

For example, all the ultrasonic sensors 110 shown in FIG. 1 may form an ultrasonic sensor module with their corresponding processing units, which may obtain corresponding various ultrasonic data based on the ultrasonic signals transmitted by the corresponding sensors and the corresponding received echo signals.

In each of the above examples, the processing unit may control the transmission and reception of signals of each ultrasonic sensor, and obtain corresponding various ultrasonic data based on the ultrasonic signals transmitted by the corresponding sensors and the corresponding received echo signals. Herein, an ultrasonic sensor may represent an ultrasonic sensing unit for transmitting and receiving ultrasonic signals and echoes, and may also represent an ultrasonic sensor module in each of the above examples. Those skilled in the art are able to distinguish the meaning of the ultrasonic sensor in a specific context.

The processing unit of the ultrasonic sensor module may obtain corresponding various ultrasonic data based on the ultrasonic signals transmitted by the corresponding sensors 110 and the corresponding received echo signals. In one example, the ultrasonic data may comprise echo data, which may comprise echo amplitude, echo significance, echo distance, echo first coordinates, echo second coordinates, sensor first coordinates, sensor second coordinates, time stamp, etc. In one example, the echo data may be obtained using the center line method. For example, during the vehicle is advancing in the direction 140, the ultrasonic sensor 110 on the right front side of the vehicle transmits an ultrasonic signal and receives an ultrasonic echo signal under the control of its processing unit. In the center line method, it is assumed that the reflection point on the detected obstacle is on the center line 150 of the ultrasonic arc. Based on this, the processing unit may detect the reflection point of the corresponding ultrasonic signal as the position of the echo, which may be represented, for example, as the echo coordinates.

In one example, the ultrasonic data may comprise intersection point data, which may comprise intersection point first coordinates, intersection point second coordinates, intersection point distance, intersection point nearest distance, sensor first coordinates, sensor second coordinates, intersection point neighbor first coordinates, intersection point neighbor second coordinates, angle with the sensor, etc. For example, during the vehicle is advancing in the direction 140, the ultrasonic sensor 110 on the right front side of the vehicle transmits an ultrasonic signal and receives an ultrasonic echo signal under the control of its processing unit. In the example shown in FIG. 1, the two sensors 110 transmit two ultrasonic signals 120. According to the known positional relationship of the two sensors 110, the transmission time of sending two ultrasonic signals 120, the reception time of receiving corresponding echoes, etc., the processing unit may calculate the intersection point 160 of the ultrasonic arcs of the two ultrasonic signals 120. The intersection point 160 can represent the reflection point on the detected obstacle, and use data about the intersection point 160 as the above-mentioned intersection data. In one example, the intersection point is not limited to the intersection point of two ultrasonic arcs of the ultrasonic signals sent by the two sensors, but may also be the intersection point of two ultrasonic arcs of the ultrasonic signals sent by the same sensor at different times. Those skilled in the art will understand that the intersection point data is calculated based on echo data, and the ultrasonic arc based on any two echo data within a certain range may obtain corresponding intersection point data.

In one example, the ultrasonic data may comprise the above-mentioned echo data and/or intersection point data, and may also optionally comprise other data related to the ultrasonic signals, such as data related to the ultrasonic signals based on methods known in the art or possible future methods.

The processing unit of the ultrasonic sensor module may provide the obtained ultrasonic data to the vehicle's control unit 130. In one example, the vehicle's control unit 130 may be an electronic control unit (ECU) of the vehicle. In one example, some or all of the operations performed by the processing unit of the ultrasonic sensor module may also be performed alternatively by the vehicle's control unit 130. For example, the above-mentioned operation of obtaining corresponding echo data and/or intersection point data based on the ultrasonic signals transmitted by the corresponding sensor 110 and the corresponding received echo signals may optionally be performed by the control unit 130 or other processing units other than the sensor module.

FIG. 2 is a schematic diagram of a control system in a vehicle according to one example.

In the control system shown in FIG. 2, the same components as those of FIG. 1 are employed with the same reference signs, and those skilled in the art will understand that only components related to the technical solutions of the present disclosure are shown in FIG. 2. As shown in FIG. 2, the ultrasonic sensor modules 105-1 to U 105-N comprise one or more ultrasonic sensors 110 and processing units 115-1 to 115-N, respectively. As described above in connection with FIG. 1, the vehicle may comprise only one ultrasonic sensor module 105 which comprises, for example, a plurality of ultrasonic sensors 110 and an ultrasonic processing unit 115 installed on a vehicle as shown in FIG. 1. Those skilled in the art will appreciate that, in different implementations, the vehicle may comprise one or more ultrasonic sensor modules 105, and each ultrasonic sensor module 105 may comprise one or more ultrasonic sensors 110.

The vehicle's control unit 130 may control the operation of the ultrasonic sensor module 105, receive ultrasonic data from the ultrasonic sensor module 105, and perform further operations based on the ultrasonic data. As described above, some or all of the operations performed by the processing unit 115 of the ultrasonic sensor module 105 may also be performed by other processing units outside the vehicle's control unit 130 or the ultrasonic sensor module 105.

The vehicle control system may also comprise a human-machine interface 180. The control unit 130 may output information understandable to a user, such as a driver, via the human-machine interface 180, and may also receive information input by the user through the human-machine interface. In one example, the user may input a selection to enter assisted parking mode via the human-machine interface 180. Upon receiving the selection, the control unit 130 may control the vehicle to operate in assisted parking mode, for example, to automatically search for a parking space and automatically park the vehicle. In another example, the control unit 130 may automatically control the vehicle to enter either assisted parking mode or automatic parking mode.

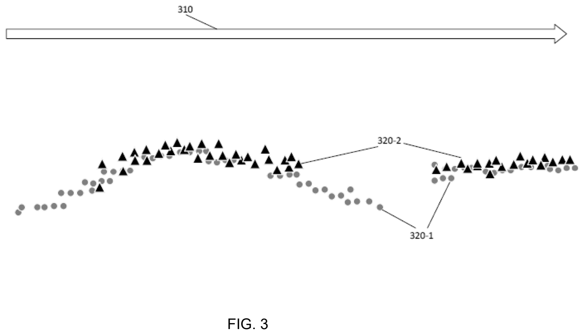

FIG. 3 is a schematic diagram of ultrasonic data according to one example.

In the example shown in FIG. 3, for example, while a vehicle is traveling in a parking lot along a direction 310, the ultrasonic sensor module 105 acquires ultrasonic data 320. The ultrasonic data 320 comprises echo data 320-1 and intersection point data 320-2. Each ultrasonic data sample point 320 shown in FIG. 3 represents an echo data sample point 320-1 or an intersection data sample point 320-1. In the schematic diagram shown in FIG. 3, a circular sample point represents an echo data sample point 320-1, and a triangular sample point represents an intersection data sample point 320-2. Each echo data sample point 320-1 may comprise information such as the echo amplitude, echo significance, echo distance, echo first coordinates, echo second coordinates, sensor first coordinates, sensor second coordinates, and timestamp. Each intersection data sample point 320-2 may comprise the intersection point first coordinates, intersection point second coordinates, distance, neighbor distance, sensor first coordinates, sensor second coordinates, intersection point neighbor first coordinates, intersection point neighbor second coordinates, sensor angle, and so on. Those skilled in the art will appreciate that, in addition to the features of the echo data and intersection point data exemplified above, the echo data and intersection point data may also comprise other features related to ultrasound signals. Any features of echo data and intersection point data known in the art or potentially adopted in the future may be applied to the technical solutions of this disclosure. Those skilled in the art will appreciate that, in addition to the exemplified echo data and intersection point data, the ultrasonic data 320 may also comprise other data related to the ultrasonic signal, such as data related to the ultrasonic signal obtained based on methods known in the art or possible methods in the future. Those skilled in the art will appreciate that FIG. 3 is merely a schematic diagram of ultrasonic data sample points for illustrative purposes. In various practical applications, the number of ultrasonic data sample points within a specific spatial range will be greater and the distribution will be more complex.

In one example, the ultrasonic data 320 shown in FIG. 3 may be cached in a buffer or memory of a processing system of the vehicle, and the control unit 130 or other processing unit of the vehicle may perform further processing on the cached ultrasonic data 320. In one example, the vehicle's control unit 130 or other processing unit may further process the cached ultrasonic data 320 to determine the position of an obstacle. In one example, the vehicle's control unit 130 or other processing unit may determine whether there is an empty parking space based on the determined obstacle position. In one example, the vehicle's control unit 130 or other processing unit may plan an automated parking route based on the detection of the empty parking space.

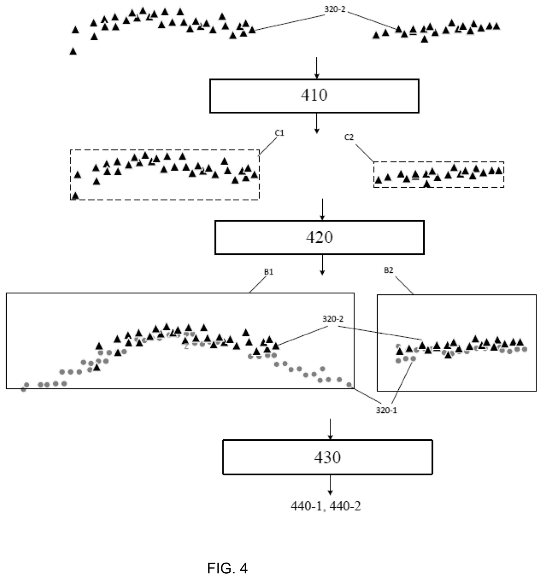

FIG. 4 is a schematic diagram of a method and module for determining the position of an obstacle around a vehicle according to one example.

In the example shown in FIG. 4, the clustering module 410 clusters the intersection point data sample set 320-2 in the ultrasonic data sample set 320 shown in FIG. 3 to obtain ultrasonic data sample clusters C1 and C2. The ultrasonic data sample set 320 may be an ultrasonic data sample set within a range defined by a sliding window. The dimension of the sliding window may be fixed or variable, and the dimension of the sliding window corresponds to the actual spatial range covered by the ultrasonic signal 120.

Clustering module 410 may cluster intersection point data sample set 320-2 using Density-Based Spatial Clustering of Applications with Noise (DBSCAN). DBSCAN is a density-based clustering algorithm that defines a cluster as the largest set of density-connected points, can divide areas with sufficiently high density into clusters, and can find clusters of any shape in a noisy spatial database. DBSCAN does not require prior knowledge of the number of clusters to be formed, can identify clusters of any shape, and is capable of detecting noise points. Given the complex environments that the technical solution of the present disclosure may encounter during specific implementations, for example, parking lots may contain obstacle areas of various shapes and sizes, the collected ultrasonic data may contain various noises, and the number of obstacles appearing in the sliding window may vary, potentially being one or multiple. The above-mentioned features of DBSCAN are therefore particularly well-suited to the technical solution of the present disclosure. DBSCAN is a clustering method known in the art. Therefore, its specific details are not described in detail. It can be understood that other appropriate clustering methods may also be used in the clustering module 410, and the technical solution of the present disclosure is not limited to DBSCAN.

Bounding box determination module 420 determines corresponding bounding boxes B1 and B2 based on ultrasonic data sample clusters C1 and C2, respectively. As shown in FIG. 4, bounding box B1 contains a first ultrasonic data sample subset consisting of echo data sample 320-1 and intersection point data sample 320-2, while bounding box B2 contains a second ultrasonic data sample subset consisting of echo data sample 320-1 and intersection point data sample 320-2.

In one example, bounding boxes B1 and B2 may be determined based on the spatial dimensions of ultrasonic data sample clusters C1 and C2. For example, the spatial dimensions of ultrasonic data sample clusters C1 and C2 may be represented by the dashed rectangular boxes enclosing clusters C1 and C2 in FIG. 4. Taking cluster C1 as an example, the dashed rectangular box enclosing cluster C1 may be determined by determining the two endpoints of cluster C1 in the vehicle's travel direction 310 and the two endpoints perpendicular to the vehicle's travel direction 310.

In other words, the spatial dimension corresponding to ultrasonic data sample cluster C1 may be determined by the four endpoints of cluster C1 in the vehicle's travel direction and in a direction perpendicular to it. The bounding box of ultrasonic data sample cluster C1 may be obtained by expanding the boundary defined by these four endpoints in the travel direction 310 and in a direction perpendicular to it. In the first example, based on the two endpoints in the vehicle's travel direction 310 of cluster C1, a predetermined first distance is extended toward the travel direction 310 and the opposite direction thereof, and based on the two endpoints in the vertical direction, a predetermined second distance is extended toward both directions of the vertical direction, thereby obtaining a bounding box B1. In a similar manner, the predetermined first and second distances are extended in four directions based on the four endpoints of cluster C2, thereby obtaining bounding box B2. In a variation of the first example, the predetermined first distance may be extended only in the travel direction, while the vertical distance of the bounding box is set to a fixed value. Thus, bounding boxes B1 and B2 have the same vertical distance.

In the second example, the distance in the travel direction between the two endpoints of cluster C1 in the vehicle's travel direction 310 and the distance in the vertical direction between the two endpoints in the perpendicular direction are determined. The distance in the travel direction is multiplied by a first coefficient to obtain an extended distance in the travel direction, and the distance in the vertical direction is multiplied by a second coefficient to obtain an extended distance in the vertical direction. The travel distance extension is then expanded in the travel direction 310 and the opposite direction based on the two endpoints in the travel direction 310, and the vertical distance extension is then expanded in both vertical directions based on the two endpoints in the perpendicular direction to obtain bounding box B1. In a similar manner, it is extended in four directions based on the four endpoints of cluster C2, thereby obtaining bounding box B2. In a variation of the second example, the predetermined first distance may be extended only in the travel direction, while the vertical distance of the bounding box is set to a fixed value. Thus, bounding boxes B1 and B2 have the same vertical distance.

In a third example, multiple distance intervals and corresponding bounding box dimensions are preconfigured. For example, a first distance interval of less than 1.3 meters corresponds to a bounding box dimension of 1.5 meters in the travel direction and 0.3 meters in the vertical direction. A second distance interval of 1.3 to 2.6 meters corresponds to a bounding box dimension of 3 meters in the travel direction and 0.3 meters in the vertical direction. A third distance interval of greater than 2.6 meters corresponds to a bounding box dimension of 7 meters in the travel direction and 0.3 meters in the vertical direction. In this example, the multiple bounding box dimensions correspond to various obstacle types. For example, the first bounding box dimension corresponds to a pillar, the second bounding box dimension corresponds to the front of a vehicle in vertical parking, and the third bounding box dimension corresponds to the body of a vehicle in parallel parking. It is understood that more or fewer distance intervals and corresponding bounding box dimensions may be preconfigured. Furthermore, the bounding box dimension may be limited only by the travel direction, while the vertical dimension may not be a fixed value.

The distance in the travel direction 310 between the two endpoints in the travel direction of cluster C1 is determined, and the range of the multiple distance intervals into which the distance falls is determined. The bounding box dimension corresponding to the range is then selected. For example, if the distance in the travel direction is between 1.3 meters and 2.6 meters, the bounding box dimension is selected to be 3 meters in the travel direction and 0.3 meters in the vertical direction. For example, based on the two endpoints in the travel direction 310, it is expanded in the travel direction 310 and the opposite direction until the distance in the travel direction reaches 3 meters, and based on the two endpoints in the vertical direction, it is expanded in both directions of the vertical direction until the distance in the vertical direction reaches 0.3 meters, thereby obtaining the bounding box B1. For another example, if the travel direction distance is between 1.3 meters and 2.6 meters, the bounding box dimension is selected to be 3 meters in the travel direction. For example, based on the two endpoints in the travel direction 310, it is expanded in the travel direction 310 and the opposite direction until the distance in the travel direction reaches 3 meters, and based on the two endpoints in the vertical direction, a predetermined distance is expanded in both directions of the vertical direction, thereby obtaining the bounding box B1.

In the same way, based on cluster C2, bounding box B2 is obtained. For example, if the distance in the travel direction of cluster C2 is less than 1.3 meters, the bounding box dimension is selected to be 1.5 meters in the travel direction and 0.3 meters in the vertical direction. For example, based on the two endpoints in the travel direction 310, it is expanded in the travel direction 310 and the opposite direction until the distance in the travel direction reaches 1.5 meters, and based on the two endpoints in the vertical direction, it is expanded in both directions of the vertical direction until the distance in the vertical direction reaches 0.3 meters, thereby obtaining the bounding box B2. For another example, if the distance in the travel direction is less than 1.3 meters, the bounding box dimension is selected to be 1.5 meters in the travel direction. For example, based on the two endpoints in the travel direction 310, it is expanded in the travel direction 310 and the opposite direction until the distance in the travel direction reaches 1.5 meters, and based on the two endpoints in the vertical direction, a predetermined distance is expanded in both directions of the vertical direction, thereby obtaining the bounding box B2.

In the first to third examples described above, in conjunction with FIG. 4, an exemplary process of determining the corresponding bounding boxes B1 and B2 based on the ultrasonic data sample clusters C1 and C2 obtained by clustering is described. It is understandable that the technical solution of the present disclosure may also adopt other specific methods for determining bounding boxes based on sample clusters. In addition, although two sample clusters are included in the example shown in FIG. 4, it is understandable that at different time points, the ultrasonic data sample set within the sliding window may comprise different numbers of sample clusters, for example, one or more sample clusters.

Although not shown in FIG. 4, two bounding boxes may overlap. For example, bounding boxes B1 and B2 in FIG. 4 may overlap. In one example, the two overlapping bounding boxes B1 and B2 may be processed separately in the manner described above in conjunction with FIG. 4, regardless of whether they overlap. In another example, it may be determined whether to merge two overlapping bounding boxes into one bounding box and merge two ultrasonic data sample subsets in the two bounding boxes into one ultrasonic data sample subset. For example, whether to merge two overlapping bounding boxes into one bounding box may be determined based on features of the ultrasonic data samples of the two ultrasonic data sample subsets in the two bounding boxes. The feature may be the angle between the intersection point data sample and the sensor. When the angles between the ultrasonic data samples of the two ultrasonic data sample subsets and the sensor are both less than a threshold, it may be determined that the two bounding boxes are to be merged into one bounding box.

Accordingly, the two ultrasonic data sample subsets in the two bounding boxes are merged into one ultrasonic data sample subset. Otherwise, the two boundary layers are not merged. For example, whether to merge the two overlapping bounding boxes into one bounding box may be determined based on a comparison of the overlapping area of the two bounding boxes and the merged area of the two bounding boxes. When the ratio of the overlapping area of two bounding boxes to the merged area of the two bounding boxes is greater than a threshold, it may be determined that the two bounding boxes are merged into one bounding box, and accordingly, the two ultrasonic data sample subsets in the two bounding boxes are merged into one ultrasonic data sample subset; when the ratio of the overlapping area of two bounding boxes to the merged area of the two bounding boxes is less than a threshold, it may be determined not to merge the two bounding boxes into one bounding box.

In a position determination module 430, the position of the corresponding first obstacle is determined based on the first ultrasonic data sample subset SS1 in the bounding box B1, and the position of the corresponding second obstacle is determined based on the second ultrasonic data sample subset SS2 in the bounding box B2. The position of the first obstacle is represented by the two endpoint positions of the first obstacle, and the position of the second obstacle is represented by the two endpoint positions of the second obstacle. In one example, ultrasonic signal-related features of the first ultrasonic data sample subset SS1 may be determined and used as input to the position determination module 430. The position determination module 430 outputs a position 440-1 of the obstacle corresponding to the first ultrasonic data sample subset SS1 based on the ultrasonic signal-related features of the first ultrasonic data sample subset SS1. The position 440-1 output by the position determination module 430 may be two coordinates, which respectively represent the positions of the two ends of the obstacle. In one example, the position determination module 430 may be implemented using a scalable gradient boosting (xgboost) model. Similarly, ultrasonic signal-related features of the second ultrasonic data sample subset SS2 may be determined and used as input to the position determination module 430.

The position determination module 430 outputs a position 440-2 of the obstacle corresponding to the second ultrasonic data sample subset SS2 based on the ultrasonic signal-related features of the second ultrasonic data sample subset SS2. The position 440-2 output by the position determination module 430 may be two coordinates, which respectively represent the positions of the two ends of the obstacle.

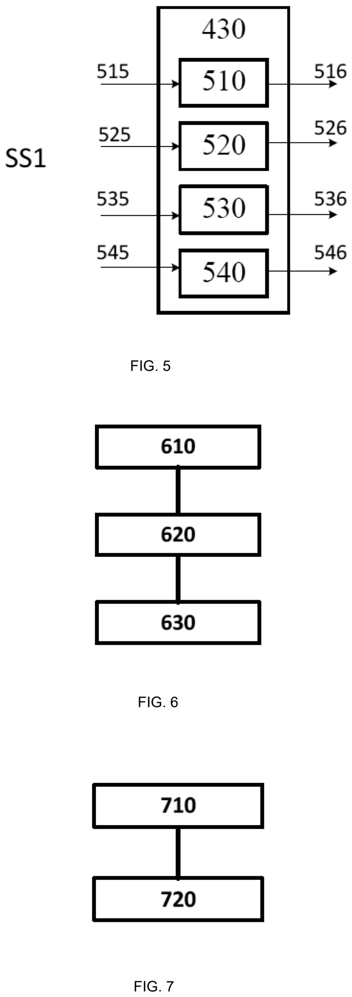

FIG. 5 is a schematic diagram of a method and module for determining the position of an obstacle according to one example.

The example shown in FIG. 5 is described below using the first ultrasonic data sample subset SS1 as an input to the position determination module 430. The position determination module 430 comprises four submodules 510, 520, 530, and 540. The submodules 510, 520, 530 and 540 generate four coordinate values 516, 526, 536 and 546, respectively, based on four feature subsets 515, 525, 535 and 545 related to the ultrasonic signals of the ultrasonic data sample subset SS1. Coordinate values 516 and 526 represent the horizontal coordinate and vertical coordinate of the position of one end of the first ultrasonic data sample subset SS1, while coordinate values 536 and 546 represent the horizontal coordinate and vertical coordinate of the position of the other end of the first ultrasonic data sample subset SS1. The coordinates (516, 526) and (536, 546) at the two ends of the first ultrasonic data sample subset SS1 can accurately represent the position of the corresponding obstacle, thereby helping to improve the performance of subsequent parking space detection and automatic parking planning.

In one example, each of the feature subsets 515 to 545 may be determined based on all ultrasonic data samples in the ultrasonic data sample subset SS1, respectively.

In another example, each of the feature subsets 515 to 545 may be determined based on a portion of the ultrasonic data samples in the first ultrasonic data sample subset SS1, respectively. In this example, taking the feature subset 515 as an example, the feature subset 515 is determined based on the first portion of the ultrasonic data samples in the first ultrasonic data sample subset SS1. For example, the first portion ultrasonic data samples comprise partial samples of the first ultrasonic data sample subset SS1 at one end portion in the vehicle's travel direction. The proportion of the first portion of the data samples in the ultrasonic data sample subset SS1 may be determined based on the dimension of the bounding box B1 corresponding to the ultrasonic data sample subset SS1. For example, in the above examples of the three bounding box dimensions, a first proportion value (e.g., 100%) may be used for a bounding box dimension of 1.5 meters in the travel direction; a second proportion value (e.g., 50%) may be used for a bounding box dimension of 3 meters in the travel direction; and a third proportion value (e.g., 20%) may be used for a bounding box dimension of 7 meters in the travel direction. In the above example, the bounding box dimension of the first ultrasonic data sample subset SS1 is 3 meters in the travel direction. Therefore, 50% of the samples at one end of the first ultrasonic data sample subset SS1 in the travel direction 310 may be selected as the first portion of samples. In one example, this 50% of data samples may be calculated by the number of samples, i.e., the 50% of data samples closest to the end. In another example, this 50% of data samples may be calculated by the distance between the two endpoints of the first sample subset SS1 in the travel direction, i.e., the data samples within 50% of the distance from the endpoints in the travel direction. Similarly, 50% of the samples at the other end of the first ultrasonic data sample subset SS1 in the travel direction 310 may be selected as the second portion of samples. Feature subsets 515 and 525 may be determined based on the ultrasonic data in the first portion of ultrasonic data samples, and feature subsets 535 and 545 may be determined based on the ultrasonic data in the second portion of ultrasonic data samples.

In one example, statistics of features of multiple ultrasonic data samples within the first portion of ultrasonic data samples may be used as a feature subset 515. For example, a statistics set may comprise mean, minimum, maximum, variance, quantile, and kurtosis. For example, the first portion of ultrasonic data samples comprises multiple echo data samples (for example, M echo data samples) and multiple intersection data samples (for example, N intersection data samples), each echo data sample comprises multiple ultrasonic signal-related features (for example, K echo features 1-K) and each intersection point data sample comprises multiple ultrasonic signal-related features (for example, L intersection point features K+1 - K+L). Various statistics (for example, if all six statistics in the above-mentioned statistics set are used, six statistical feature vectors are obtained, each statistical feature vector comprising features 1-K) of the echo data may be calculated for the multiple (for example, M) echo data samples, various statistics (for example, six statistical feature vectors are obtained, and each statistical feature vector comprises features K+1 - K+L) of the intersection point data may be calculated for the multiple (for example, N) intersection point data samples, and the statistical feature vectors of the echo data and the corresponding statistical feature vectors of the intersection point data are combined into the statistical feature vectors (for example, six statistical feature vectors, each vector comprising features 1 - K+L) of the first portion of ultrasonic data samples as the feature subset 515. Similarly, statistics of features of the plurality of ultrasonic data samples in the first portion of ultrasonic data samples may be taken as a feature subset 525, and statistics of features of the plurality of ultrasonic data samples in the second portion of samples may be taken as feature subsets 535 and 545. Those skilled in the art will appreciate that the technical solution of the present disclosure is not limited to the specific number of features employed.

In one example, the same ultrasonic data features may be used for submodules 510 to 540. For example, the amplitude, significance and echo travel distance of the echo data and the intersection point coordinates, the distance from the intersection point to the first reference point, the distance from the intersection point to the second reference point, the coordinates of the sensor, and the angle with the sensor of the intersection point data are used for submodules 510 to 540. In another example, different ultrasonic data features may be employed for the submodules 510 to 540. Those skilled in the art will appreciate that, during the training process of the models 510 to 540, the optimal ultrasonic data features for each of the submodules 510 to 540 may be determined.

In one example, the first statistics subset in the above statistical set may be used as the feature subset 515, the second statistics subset in the above statistical set may be used as the feature subset 525, the third statistics subset in the above statistical set may be used as the feature subset 535, and the fourth statistics subset in the above statistical set may be used as the feature subset 545. The first to fourth statistics subsets may be different. For example, the first statistics subset contains the mean, minimum, variance, and quartiles in the statistics set; the second statistics subset contains the mean, maximum, variance, and kurtosis in the statistics set; the third statistics subset contains the mean, maximum, variance, and quartiles in the statistics set; and the fourth statistics subset contains the mean, maximum, variance, and quartiles in the statistics set. Those skilled in the art will appreciate that during the training process of models 510 to 540, the optimal first statistics subset, second statistics subset, third statistics subset, and fourth statistics subset may be determined. Those skilled in the art will appreciate that the technical solution of the present disclosure is not limited to a specific statistics set, nor is it limited to a specific statistics subset.

In one example, the first position determination submodule 510, the second position determination submodule 520, the third position determination submodule 530, and the fourth position determination submodule 540 may be implemented using a scalable gradient boosting (xgboost) model. In one example, the first position determination submodule 510, the second position determination submodule 520, the third position determination submodule 530, and the fourth position determination submodule 540 may have different model structures. For example, when the xgboost model is used for implementation, the submodules 510 to 540 may have different numbers of layers and numbers of decision nodes per layer. Those skilled in the art will appreciate that during the training process of submodels 510 to 540, the structures of the optimal first xgboost model, the second xgboost model, the third xgboost model, and the fourth xgboost model may be determined. Those skilled in the art will appreciate that the technical solution of the present disclosure is not limited to the structure of a specific xgboost model.

In one example, the feature subset 515 may comprise features of multiple ultrasonic data samples within the first portion of ultrasonic data samples in addition to the above-mentioned statistical features of features of multiple ultrasonic data samples within the first portion of ultrasonic data samples. Similarly, the feature subsets 525, 535, and 545 may comprise features of multiple ultrasonic data samples within the first portion of ultrasonic data samples or 337-2 in addition to the above-mentioned statistical features of features of multiple ultrasonic data samples within the first portion of ultrasonic data samples or 337-2.

Although in the example of the method for determining the position of an obstacle around a vehicle described in conjunction with FIG. 4 and FIG. 5, only the intersection point data sample set 320-2 in the ultrasonic data sample set 320 is clustered in the clustering module 410, in other examples, all data samples in the ultrasonic data sample set 320 may be clustered in the clustering module 410 to obtain corresponding ultrasonic data sample clusters C1 and C2, and subsequent processing may be performed in a similar manner in the bounding box determination module 420 and the position determination module 430. Clustering only the intersection point data sample set 320-2 may have certain advantages compared to clustering the intersection point data sample set 320-2 and the echo data sample 320-1 together, because the density of the intersection point data sample cluster set 320-2 is higher and the distance between different intersection point data sample cluster sets 320-2 is larger, which is conducive to obtaining better clustering results and making it easier to eliminate noise.

FIG. 6 is a flow chart of a method for determining the position of an obstacle in the surroundings of a vehicle according to one example.

At step 610, clustering is performed on at least a portion of the ultrasonic data samples in the ultrasonic data sample set to obtain one or more ultrasonic data sample clusters. According to one example, at least a portion of the ultrasonic data samples in the ultrasonic data sample set are clustered by DBSCAN.

At step 620, one or more corresponding bounding boxes are determined based on the one or more ultrasonic data sample clusters, wherein the one or more bounding boxes respectively comprise one or more ultrasonic data sample subsets in the ultrasonic data sample set.

At step 630, for an ultrasonic data sample subset in the one or more ultrasonic data sample subsets, ultrasonic signal-related features of the ultrasonic data sample subset are determined, and the position of an obstacle corresponding to the ultrasonic data sample subset is determined based on the ultrasonic signal-related features of the ultrasonic data sample subset.

According to one example, the ultrasonic data sample set comprises a first type of ultrasonic data sample set and a second type of ultrasonic data sample set. At step 610, clustering is performed only on the first type of ultrasonic data sample set to obtain one or more ultrasonic data sample clusters. The one or more ultrasonic data sample subsets comprised in the one or more bounding boxes comprise the first type of ultrasonic data samples and the second type of ultrasonic data samples comprised in the one or more bounding boxes.

According to one example, the first type of ultrasonic data samples comprise intersection point data samples, and the second type of ultrasonic data samples comprise echo data samples. According to one example, the echo data sample comprise at least a portion of the echo first coordinates, echo second coordinates, echo amplitude, echo significance and echo distance of the corresponding echo of each ultrasonic signal obtained based on the center line detection method; and/or, the intersection point data sample comprises at least a portion of the intersection point first coordinates, intersection point second coordinates, intersection point distance, intersection point neighbor distance, sensor first coordinates, sensor second coordinates, intersection point neighbor first coordinates, intersection point neighbor second coordinates, and angle with the sensor. According to one example, at step 620, a bounding box corresponding to each ultrasonic data sample cluster in the one or more ultrasonic data sample clusters is determined based on a spatial dimension corresponding to the ultrasonic data sample cluster, wherein the bounding box contains the ultrasonic data sample cluster and the additional ultrasonic data samples. According to one example, a first sample endpoint and a second sample endpoint in the ultrasonic data sample cluster in the travel direction of the vehicle, as well as a third sample endpoint and a fourth sample endpoint in a direction perpendicular to the travel direction of the vehicle, are determined; and a boundary defined by the first, second, third, and fourth sample endpoints is expanded in the travel direction and the perpendicular direction to obtain a bounding box for the ultrasonic data sample cluster. According to one example, a first sample endpoint and a second sample endpoint in the ultrasonic data sample cluster in the travel direction of the vehicle are determined; a distance between the first and second sample endpoints in the travel direction is determined; a bounding box dimension is determined from a plurality of bounding box dimensions based on whether the distance falls within a distance interval of a plurality of distance intervals, wherein the plurality of distance intervals correspond to the plurality of bounding box dimensions; and a bounding box having the determined bounding box dimension is determined for the ultrasonic data sample cluster. According to one example, a first bounding box dimension of the plurality of bounding box dimensions corresponds to a vertical parking type obstacle. According to one example, a second bounding box dimension of the plurality of bounding box dimensions corresponds to a transverse parking type obstacle. According to one example, a third bounding box dimension in the plurality of bounding box dimensions corresponds to a pillar type obstacle.

According to one example, two of the one or more bounding boxes overlap. The method shown in FIG. 6 further comprises: determining whether to merge the two overlapping bounding boxes into one bounding box and merging two subsets within the two bounding boxes into one subset. According to one example, determining whether to merge the two overlapping bounding boxes into one bounding box is based on first features of ultrasonic data samples from two ultrasonic data sample subsets within the two bounding boxes. According to one example, determining whether to merge the two overlapping bounding boxes into one bounding box is based on a comparison of an overlapping area of the two bounding boxes and a merged area of the two bounding boxes.

According to one example, at step 630, ultrasonic signal-related features of the ultrasonic data sample subset are determined based on all ultrasonic data samples in the ultrasonic data sample subset; or ultrasonic signal-related features of the ultrasonic data sample subset are determined based on a first portion of samples at one end of the ultrasonic data sample subset and a second portion of samples at the other end of the ultrasonic data sample subset. According to one example, a proportion of a portion of data samples in the ultrasonic data sample subset is determined based on a dimension of a bounding box corresponding to the ultrasonic data sample subset; a first portion of samples at an end and a second portion of samples at the other end of the ultrasonic data sample subset are determined based on the proportion; and ultrasonic signal-related features of the ultrasonic data sample subset are determined based on the first portion of samples and the second portion of samples. According to one example, a first set of features and a second set of features related to the ultrasonic signals of the ultrasonic data sample subset are determined based on the first portion of samples, and a third set of features and a fourth set of features related to the ultrasonic signals of the ultrasonic data sample subset are determined based on the second portion of samples. According to one example, a first set of features and a second set of features related to the ultrasonic signals of the ultrasonic data sample subset are determined by respectively calculating a first portion of statistics and a second portion of statistics from a plurality of statistics for the first portion of features and the second portion of features of the ultrasonic data in the first portion of samples, and a third set of features and a fourth set of features related to the ultrasonic signals of the ultrasonic data sample subset are determined by respectively calculating a third portion of statistics and a fourth portion of statistics from the plurality of statistics for the third portion of features and the fourth portion of features of the ultrasonic data in the second portion of samples. According to one example, a first coordinate value and a second coordinate value of a first position of an obstacle corresponding to the ultrasonic data sample subset are determined based on the first set of features and the second set of features related to the ultrasonic signals of the ultrasonic data sample subset, and a third coordinate value and a fourth coordinate value of a second position of the obstacle corresponding to the ultrasonic data sample subset are determined based on the third set of features and the fourth set of features related to the ultrasound signals of the ultrasonic data sample subset.

According to one example, at step 630, determining the position of the obstacle corresponding to the ultrasonic data sample subset based on the ultrasonic signal-related features of the ultrasonic data sample subset is performed using an xgboost model. According to one example, the xgboost model comprises a first xgboost submodel, a second xgboost submodel, a third xgboost submodel, and a fourth xgboost submodel, wherein the first xgboost submodel, the second xgboost submodel, the third xgboost submodel, and the fourth xgboost submodel generate the first coordinate value, the second coordinate value, the third coordinate value, and the fourth coordinate value based on the first set of features, the second set of features, the third set of features, and the fourth set of features related to the ultrasonic signals of the ultrasonic data sample subset, respectively.

FIG. 7 shows a method for detecting an empty parking space according to one example.

At step 710, the position of an obstacle around the vehicle is determined based on the ultrasonic signals. The various examples described herein with reference to FIGs. 1-6 may be employed to determine the position of the obstacle around the vehicle based on the ultrasonic signals.

At step 720, an empty parking space is detected based on the determined obstacle position. In one example, for each sliding of the sliding grid window, at step 710, the positions of one or more obstacles within the sliding window are output. At step 720, the positions of the obstacles and, accordingly, the positions and sizes of the spaces beyond the obstacles may be determined based on this position data, thereby accurately identifying the position and size of the empty parking space. Detecting an empty parking space based on the positions of obstacles at step 720 may be implemented using various suitable methods known in the art.

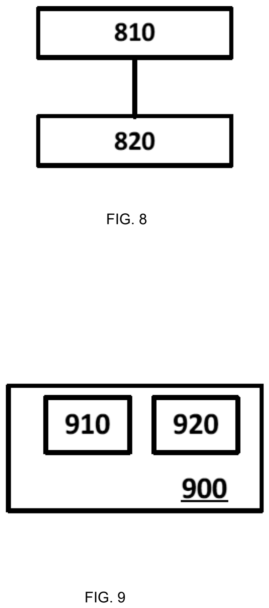

FIG. 8 shows a method for assisting parking according to one example.

At step 810, an empty parking space around the vehicle is detected. The various examples described herein in conjunction with FIGs. 1-7 may be used to determine an empty parking space around the vehicle based on ultrasonic signals.

At step 820, a route is planned for driving the vehicle into an empty parking space based on the detected empty space.

The parking route planning at step 820 may be implemented using various suitable methods known in the art.

FIG. 9 is a block diagram of a control system for a vehicle according to one example. According to one example, the control system or processing system 900 may comprise one or more control units or processing units 910, the control unit 910 executing one or more machine-readable instructions stored or encoded in a machine-readable storage medium (i.e., memory 920). Although not shown in FIG. 9, those skilled in the art may appreciate that the control system 900 may comprise various other components, for example, various communication modules, bus modules, and possible user interface modules, and the like.

In one example, the control system 90 may comprise the control unit 130 and/or processing unit 115 shown in FIG. 1 and 2, which, when executing program instructions, are configured to perform the various operations and functions described above in conjunction with FIGs. 1-8.

According to one example, a program product, such as a non-transitory machine-readable medium, is provided. The non-transitory machine-readable medium may have instructions that, when executed by a machine, such as control unit 910, cause a device, such as control unit 910 or a vehicle, to perform various operations and functions described above in conjunction with FIGs. 1-8 in various examples of the present application.

According to one example, a vehicle is provided. The vehicle has an ultrasonic sensor, such as that shown in FIG. 1, for transmitting and receiving ultrasonic signals, and a control system 900 as shown in FIG. 9. Exemplary examples are described above with reference to the specific examples described in the accompanying drawings, but do not represent all examples that may be implemented or fall within the scope of protection of the Claims. Throughout the present Specification, the term "exemplary" means "serving as an example, instance, or illustration" and does not imply "preferred" or "advantageous" over other examples. Specific examples comprise specific details to facilitate understanding of the described technology. However, these technologies may be implemented without these specific details. In some instances, to avoid causing difficulties in understanding the concepts of the described examples, known structures and devices are shown in block diagram form.

The aforementioned description of the present disclosure is provided to allow any person of ordinary skill in the art to implement or use the present disclosure. Various modifications to the present disclosure will be apparent to those of ordinary skill in the art, and the general principles defined herein may be applied to other variations without departing from the scope of protection of the present disclosure. Therefore, the present disclosure is not limited to the exemplary examples and designs described herein but is consistent with the broadest scope defined by the principles and novel features disclosed herein.

## Claims

1. A method for determining the position of an obstacle in the surroundings of a vehicle based on ultrasonic signals, comprising:
clustering at least a portion of ultrasonic data samples in an ultrasonic data sample set to obtain one or more ultrasonic data sample clusters;
determining one or more corresponding bounding boxes based on the one or more ultrasonic data sample clusters, wherein the one or more bounding boxes respectively comprise one or more ultrasonic data sample subsets in the ultrasonic data sample set; and
determining, for an ultrasonic data sample subset in the one or more ultrasonic data sample subsets, ultrasonic signal-related features of the ultrasonic data sample subset, and determining the position of an obstacle corresponding to the ultrasonic data sample subset based on the ultrasonic signal-related features of the ultrasonic data sample subset.

2. The method according to claim 1, wherein the ultrasonic data sample set comprises a first type of ultrasonic data sample set and a second type of ultrasonic data sample set;
wherein clustering at least a portion of the ultrasonic data samples in the ultrasonic data sample set comprises: clustering only the first type of ultrasonic data sample set to obtain the one or more ultrasonic data sample clusters; and
wherein the one or more ultrasonic data sample subsets respectively comprised in the one or more bounding boxes comprise the first type of ultrasonic data samples and the second type of ultrasonic data samples respectively comprised in the one or more bounding boxes.

3. The method according to claim 2, wherein the first type of ultrasonic data samples comprise intersection point data samples, and the second type of ultrasonic data samples comprise echo data samples.

4. The method according to claim 3, wherein the echo data samples comprise at least a portion of the following: echo first coordinates, echo second coordinates, echo amplitude, echo significance, and echo distance of corresponding echo of each ultrasonic signal obtained based on a center line detection method; and/or wherein the intersection point data samples comprise at least a portion of the following: intersection point first coordinates, intersection point second coordinates, intersection point distance, intersection point neighbor distance, first sensor coordinates, second sensor coordinates, intersection point neighbor first coordinates, intersection point neighbor second coordinates, and angle with the sensor.

5. The method according to any one of claims 1 to 4, wherein clustering at least a portion of ultrasonic data samples in the ultrasonic data sample set comprises: clustering at least a portion of the ultrasonic data samples in the ultrasonic data sample set by Density-Based Spatial Clustering of Applications with Noise (DBSCAN).

6. The method according to any one of claims 1 to 4, wherein determining one or more bounding boxes based on the one or more ultrasonic data sample clusters comprises: determining a bounding box corresponding to each ultrasonic data sample cluster in the one or more ultrasonic data sample clusters based on a spatial dimension corresponding to the ultrasonic data sample cluster, wherein the bounding box contains the ultrasonic data sample cluster and the additional ultrasonic data samples.

7. The method according to claim 6, wherein determining a bounding box corresponding to each ultrasonic data sample cluster in the one or more ultrasonic data sample clusters based on a spatial dimension corresponding to the ultrasonic data sample cluster comprises:
determining a first sample endpoint and a second sample endpoint in the vehicle's travel direction, and a third sample endpoint and a fourth sample endpoint in a direction perpendicular to the travel direction in the ultrasonic data sample cluster; and
expanding a boundary defined by the first, second, third, and fourth sample endpoints in the travel direction and the perpendicular direction to obtain a bounding box for the ultrasonic data sample cluster.

8. The method according to claim 6, wherein determining a bounding box corresponding to each ultrasonic data sample cluster in the one or more ultrasonic data sample clusters based on a spatial dimension corresponding to the ultrasonic data sample cluster comprises:
determining a first sample endpoint and a second sample endpoint in the vehicle's travel direction in the ultrasonic data
sample cluster;
determining a distance between the first and second sample endpoints in the travel direction;
determining a bounding box dimension from a plurality of bounding box dimensions based on whether the distance falls within a distance interval of a plurality of distance intervals, wherein the plurality of distance intervals correspond to the plurality of bounding box dimensions; and
determining a bounding box having the determined bounding box dimension for the ultrasonic data sample cluster.

9. The method according to any one of claims 1 to 4, wherein two of the one or more bounding boxes overlap, the method further comprising:
determining whether to merge the two overlapping bounding boxes into one bounding box based on first features of ultrasonic data samples from two ultrasonic data sample subsets within the two bounding boxes; and/or
determining whether to merge the two overlapping bounding boxes into one bounding box based on a comparison of the overlapping area of the two bounding boxes and the merged area of the two bounding boxes.

10. The method according to claim 1, wherein determining ultrasonic signal-related features of the ultrasonic data sample subset comprises:
determining ultrasonic signal-related features of the ultrasonic data sample subset based on all ultrasonic data samples in the ultrasonic data sample subset; or
determining ultrasonic signal-related features of the ultrasonic data sample subset based on a first portion of samples at an end of the ultrasonic data sample subset and a second portion of samples at another end of the ultrasonic data sample subset.

11. The method according to claim 1, wherein determining ultrasonic signal-related features of the ultrasonic data sample subset comprises:
determining a proportion of a portion of data samples in the ultrasonic data sample subset based on the dimension of a bounding box corresponding to the ultrasonic data sample subset;
determining a first portion of samples at an end and a second portion of samples at the other end of the ultrasonic data sample subset based on the proportion;
determining the ultrasonic signal-related features of the ultrasonic data sample subset based on the first portion of samples and the second portion of samples.

12. The method according to claim 10 or 11, wherein determining ultrasonic signal-related features of the ultrasonic data sample subset comprises: determining a first set of features and a second set of features related to the ultrasonic signals of the ultrasonic data sample subset based on the first portion of samples, and determining a third set of features and a fourth set of features related to the ultrasonic signals of the ultrasonic data sample subset based on the second portion of samples.

13. The method according to claim 12, wherein determining ultrasonic signal-related features of the ultrasonic data sample subset comprises: determining a first set of features and a second set of features related to the ultrasonic signals of the ultrasonic data sample subset by respectively calculating a first portion of statistics and a second portion of statistics from a plurality of statistics for the first portion of features and the second portion of features of the ultrasonic data in the first portion of samples, and determining a third set of features and a fourth set of features related to the ultrasonic signals of the ultrasonic data sample subset by respectively calculating a third portion of statistics and a fourth portion of statistics from the plurality of statistics for the third portion of features and the fourth portion of features of the ultrasonic data in the second portion of samples.

14. The method according to claim 13, wherein determining the position of an obstacle corresponding to the ultrasonic data sample subset comprises: determining a first coordinate value and a second coordinate value of a first position of the obstacle corresponding to the ultrasonic data sample subset based on the first set of features and the second set of features related to the ultrasonic signals of the ultrasonic data sample subset, and determining a third coordinate value and a fourth coordinate value of a second position of the obstacle corresponding to the ultrasonic data sample subset based on the third set of features and the fourth set of features related to the ultrasound signals of the ultrasonic data sample subset.

15. The method according to claim 14, wherein determining the position of the obstacle corresponding to the ultrasonic data sample subset based on the ultrasonic signal-related feature of the ultrasonic data sample subset is performed by an xgboost model, wherein the xgboost model comprises a first xgboost submodel, a second xgboost submodel, a third xgboost submodel, and a fourth xgboost submodel, wherein the first xgboost submodel, the second xgboost submodel, the third xgboost submodel, and the fourth xgboost submodel respectively generate the first coordinate value, the second coordinate value, the third coordinate value, and the fourth coordinate value based on the first set of features, the second set of features, the third set of features, and the fourth set of features related to the ultrasound signals of the ultrasonic data sample subset.

16. A method for detecting an empty parking space, comprising:
determining the position of an obstacle using the method according to any one of claims 1 to 15; and detecting an empty parking space based on the determined position of the obstacle.

17. A method for assisting parking, comprising:
detecting an empty parking space using the method according to claim 16;
planning a route for driving the vehicle into the empty parking space based on the detected empty parking space.

18. A control system for a vehicle, comprising:
one or more processing units, the processing units, when executing program instructions, configured to perform the method according to one of claims 1 to 17.

19. A vehicle, comprising:
an ultrasonic sensor for transmitting and receiving ultrasonic signals;
the control system according to claim 18.

20. A machine-readable storage medium having executable instructions stored thereon, the instructions, when executed, causing one or more processors to perform the method according to any one of claims 1 to 17.
